(19) **Europäisches Patentamt / European Patent Office / Office européen des brevets**

(11) **EP 3 926 766 B1**

(12) **EUROPEAN PATENT SPECIFICATION**

(45) Date of publication and mention
of the grant of the patent:
**19.04.2023 Bulletin 2023/16**

(21) Application number: **20382534.4**

(22) Date of filing: **19.06.2020**

(51) International Patent Classification (IPC):
*H01S 3/081* (2006.01)    *H01S 3/08* (2023.01)
*H01S 3/094* (2006.01)    *H01S 3/16* (2006.01)

(52) Cooperative Patent Classification (CPC):
**H01S 3/168; H01S 3/0815;** H01S 3/08022;
H01S 3/094034

(54) **NETWORKS OF COUPLED RANDOM LASERS WITH SPATIALLY LOCALISED FEEDBACK**

NETZWERKE VON GEKOPPELTEN RANDOM-LASERN MIT RÄUMLICH LOKALISIERTER RÜCKKOPPLUNG

RÉSEAUX DE LASERS ALÉATOIRES COUPLÉS AVEC RÉTROACTION LOCALISÉE SPATIALEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.12.2021 Bulletin 2021/51**

(73) Proprietor: **Consejo Superior de Investigaciones Científicas (CSIC) 28006 Madrid (ES)**

(72) Inventors:
- **LÓPEZ FERNÁNDEZ, Ceferino 28049 Madrid (ES)**
- **CONSOLI, Antonio 28049 Madrid (ES)**
- **CASELLI, Niccolò 28049 Madrid (ES)**

(74) Representative: **Tribalyte Ideas Gta. Quevedo 8, 6°2 28015 Madrid (ES)**

(56) References cited:
**EP-A1- 3 148 017**

- **MICHELE GAIO ET AL: "A nanophotonic laser on a graph", ARXIV.ORG, CORNELL UNIVERSITY LIBRARY, 201 OLIN LIBRARY CORNELL UNIVERSITY ITHACA, NY 14853, 18 October 2017 (2017-10-18), XP081327446,**
- **ZHANG HONG ET AL: "Coherent random lasing from liquid waveguide gain channels with biological scatters", APPLIED PHYSICS LETTERS, A I P PUBLISHING LLC, US, vol. 105, no. 25, 22 December 2014 (2014-12-22), XP012193117, ISSN: 0003-6951, DOI: 10.1063/1.4905035 [retrieved on 1901-01-01]**
- **DHANKER R ET AL: "Random lasing in organo-lead halide perovskite microcrystal networks", APPLIED PHYSICS LETTERS, A I P PUBLISHING LLC, US, vol. 105, no. 15, 13 October 2014 (2014-10-13), XP012191011, ISSN: 0003-6951, DOI: 10.1063/1.4898703 [retrieved on 1901-01-01]**

**EP 3 926 766 B1**

**Description**

**FIELD OF THE INVENTION**

The present invention generally relates to the fields of photonic neural networks. More specifically, the invention relates to the field of random lasing (RL) technologies and the manufacture of systems or networks of coupled random lasers. The invention can be applied within many different sectors principally including information processing.

**BACKGROUND OF THE INVENTION**

Synchronization among coupled elements is a ubiquitous concept used for describing the dynamics of non-linear systems arranged in complex networks, such as oscillatory mechanical modes, spatiotemporal chaos in fluid dynamics, synaptic neural networks or interacting lasers. Nanoscale photonics has recently gained attention for mimicking both structural and functional features of neural networks by developing integrated optical circuits and coupled lasers, where the non-linearity is given by amplified light emission. While synchronization has been proved in systems of interacting semiconductor lasers, little is known about the same effect in random laser (RL) architectures.

Contrary to conventional lasers, RLs do not require the engineering of a high-quality cavity, since they are based on disordered media in which the feedback necessary to trigger the laser amplification is provided by strong elastic light scattering. Therefore, RLs rely on a relatively easier manufacture, which allows inexpensive devices. An RL typically presents an emission spectrum with many narrow-line modes that cannot be arranged a priori, as in a conventional cavity laser that enable spectral super-resolution. The resulting emission shows lower spatial coherence adequate for speckle-free illumination. RLs and, more generally, optical localised random modes, have found application in a large variety of fields, from energy harvesting and information processing to sensing and tumour cell recognition, to name a few.

The most widespread RL implementation is based on spatially distributed feedback, where the scattering centres are randomly placed inside an optically active medium. A different configuration, called RL with spatially localised feedback, in which the scattering elements are separated from the active medium that is embedded between them, has been developed in the last years. Since the geometry of RLs does not vary with time, they show a stable emission that allows to disentangle the individual contributions when single RLs are arranged in a network. Coupling between modes has been studied in a single RL, both with distributed and localised feedback, but not between multiple RLs. Therefore, there is a need within this field to develop specific techniques for the fabrication of coupled random lasers in networks.

The present invention is aimed at solving this need by proposing a novel class of active optical networks based on RLs with spatially localised feedback.

**SUMMARY OF THE INVENTION**

A first object of the invention relates to a random laser coupling system, comprising at least three spatially separated (hence the designation of spatially localised feedback) light-scattering centres and at least two laser-pumping stripes, wherein each laser-pumping stripe connects two of said light-scattering centres, thereby configuring at least two random laser resonators with spatially localised feedback, and wherein one of the at least three light-scattering centres is connected to two of the laser-pumping stripes, so that the at least two random laser resonators share one of the light-scattering centres. Although the present document will generally refer to "laser-pumping stripes", this term will also include any optical means suitable for triggering random lasing between pairs of scattering centres, as understood in the field of the invention. Advantageously, one of the at least three light-scattering centres is connected to two of the laser-pumping stripes, so that the at least two random laser resonators share one of the light-scattering centres.

In a preferred embodiment of the invention, the spatially separated light-scattering centres and the laser-pumping stripes are inscribed in a polymer film containing a material with optical gain, adapted to provide amplification through stimulated emission, for instance, a dye.

In a further preferred embodiment of the invention, the system further comprises a glass or similar substrate, wherein the polymer film is arranged and wherein, typically, the polymer film comprises a thickness value between 10-50 $\mu$m.

A variation wherein the active laser material film is self-standing without the aid of a substrate or wherein the substrate is opaque but the pumping is performed from the optically accessible side is understood to be comprised in this description.

In a further preferred embodiment of the invention, the random-lasing light-scattering centres comprise one or more holes bored in the polymer film, wherein the internal surface of the holes forms a light-scattering air/polymer interface. Typically, the holes comprise a diameter size value between 10-150 $\mu$m and, more preferably, they are arranged with a regular or disordered distribution or pattern in the polymer film. In different embodiments of the invention, the number of holes in each light-scattering centre is between one and five, between six and ten, or above ten.

In a further preferred embodiment of the invention, the light-scattering centres and the laser-pumping stripes form a network topology, where every light-scattering centre can be connected to at least one laser-pumping stripe and every pumping stripe can share one scattering centre with another. Alternatively, the light-scattering centres and the laser-pumping stripes form an open topology, where one or more of the light-scattering centres are connected to only one laser-pumping stripe.

In a further preferred embodiment of the invention, the system preferably comprises a pumping laser adapted for pumping the random laser resonators. More preferably, the at least three spatially separated random-lasing light-scattering centres and the at least two laser-pumping stripes are arranged defining a plane, wherein the pumping laser beam is oriented substantially orthogonal to said plane. Within the context of the invention, the expression "substantially" will be interpreted as coming and being steered from the said direction. In a further preferred embodiment of the invention, the pumping can originate in the substrate and be comprised of pixelated light sources capable to define the said pumping stripes.

A second object of the invention refers to a method for coupling a plurality of random laser resonators comprising the use of a system according to any of the embodiments described in this document and further comprising a step of pumping a laser or other pumping light source on said system, such that at least two random laser resonators that share one of the light-scattering centres are activated at the same time. Preferably, the method also comprises a time-programmed sequence of pumping laser pulse activations over different selected random laser resonators of the system.

A third object of the invention refers to the use of a random laser coupling system or a method for coupling a plurality of random laser resonators according to any of the embodiments described in this document in information processing, wherein:

- an information input is provided as a set of pumping conditions and an information output is extracted from the shared light-scattering centres' emission;
- reservoir computing implementations are created by fixing a set of pumping conditions and analysing an information output from a plurality of selected shared light-scattering centres' emission as a function of input fed to the selected shared scattering centres; and/or
- computing functions are achieved in a spectrum synthesiser, comprising a neural network of coupled random lasers adapted to emit, from selected shared scattering centres, predesigned spectra with given characteristics in terms of spectral features, by training the pumping of the constituent random laser resonators.

## BRIEF DESCRIPTION OF THE DRAWINGS

To complete the description and in order to facilitate a better understanding of the invention, a set of drawings is provided. Said drawings form an integral part of the description and illustrate an embodiment of the invention, which should not be interpreted as restricting the scope of the invention, but just as an example of how the invention can be carried out. The accompanying drawings comprise specifically the following figures:

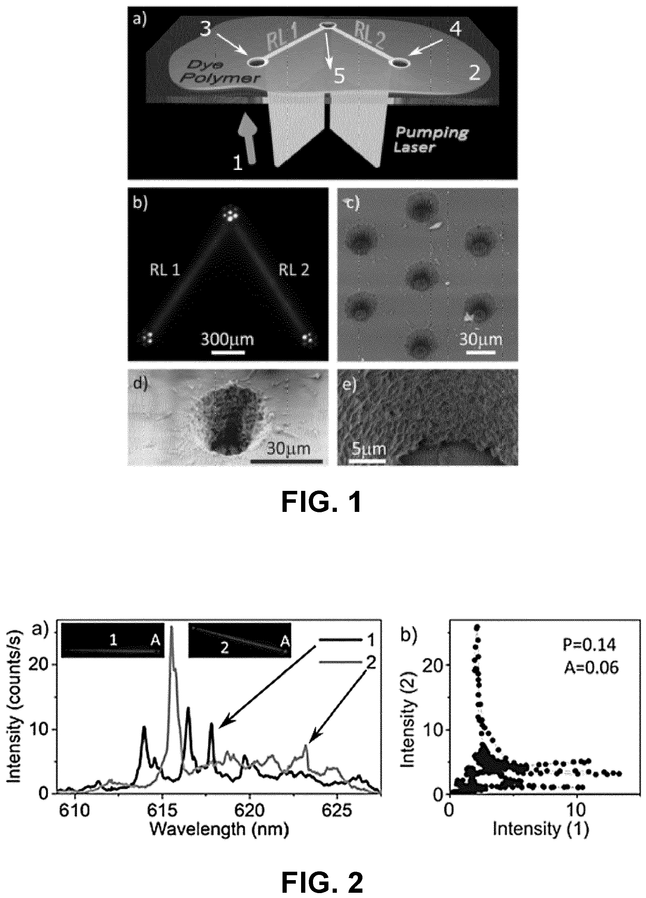

Figure 1 illustrates some details about the RL network fabrication. a) Schematics of the random lasers network. The dye-doped polymer thin film is deposited on a glass substrate and scattering centres are created by drilling the film. Optical excitation is performed by an SLM sculpted laser impinging from the bottom and uniformly pumping regions that connect the scatterers. b) Emission intensity image (acquired by CCD) of two RLs pumped simultaneously. Each resonator consists of a rectangular pumped volume placed between two scattering centres made of seven holes in a hexagonal pattern. c-e) Scanning electron microscopy (SEM) images of one of the scattering centres in b), reported with increasing magnification to highlight the rough sidewalls inside a given hole, responsible for the RL feedback action.

Figure 2 shows the independent spectra from two RL resonators with scattering centres made of single holes of 30 $\mu$m diameter size as an example of fully uncorrelated spectra. a) Spectrum acquired in position A by pumping line 1 and line 2, respectively. In the insets the out-of-plane emissions of the two cases are reported. Both lines length is 2 mm. b) Parametric plot of the intensity of the spectra reported in a). The values of Pearson correlation (P) and of the area of the parametric plot (A) are reported for each case.

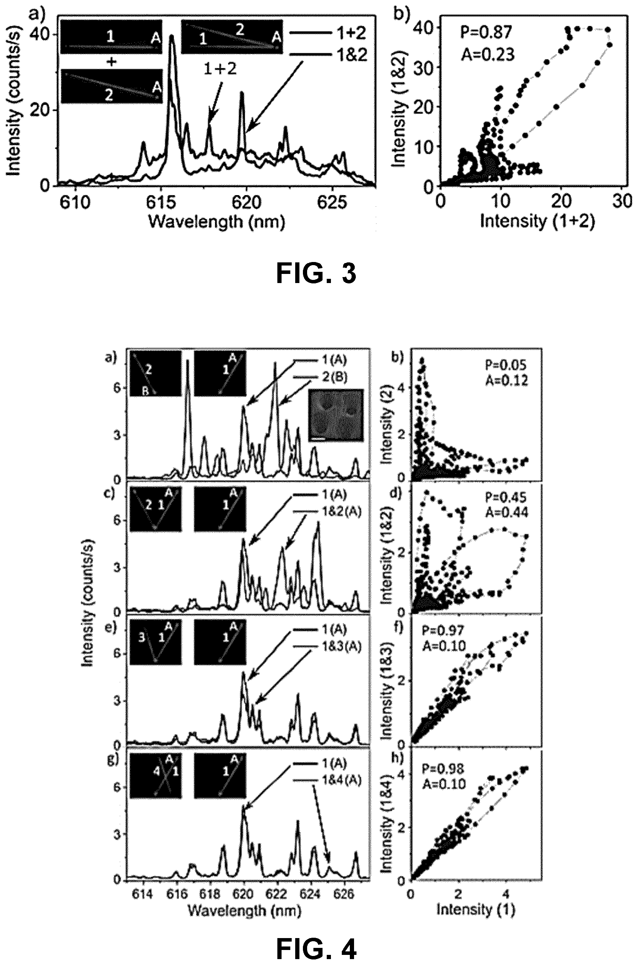

Figure 3 displays a two resonators RL network with scattering centres made of single holes of 30 $\mu$m diameter size, corresponding to the one reported in Fig. 2. a) Spectra obtained by summing the single emissions (1+2 curve), and by pumping simultaneously both lines (1&2 curve). All the spectra are collected from position A. b) Parametric plot of the intensity of the spectra reported in a). The values of Pearson correlation (P) and of the area of the parametric plot (A) are reported for each case.

Figure 4 shows a RL network with scattering centres made of holes (50 $\mu$m diameter size) arranged in square pattern with 100 $\mu$m side. a) Spectrum acquired in position A by pumping line 1 and in position B by pumping line 2. In the insets the out-of-plane emission of the two RLs is reported, along with the SEM image of one scattering centre (scale bar 50 $\mu$m). b) Parametric plot of the intensity of the spectra reported in a). c) Spectra acquired in position A by pumping line 1, and by pumping line 1 and 2 simultaneously (1&2). d) Parametric plot of the intensity of the spectra reported in c). e) Spectra obtained in A by pumping line 1 and by pumping line 1 and 3 simultaneously (1 &3). f) Parametric plot of the intensity of the spectra reported in e). g) Spectra obtained in A by pumping line 1 and by pumping line 1 and 4 simultaneously (1&4). h) Parametric plot of the intensity of the spectra reported in g). The values of Pearson correlation (P) and of the area of the parametric plot (A) are reported for each case.

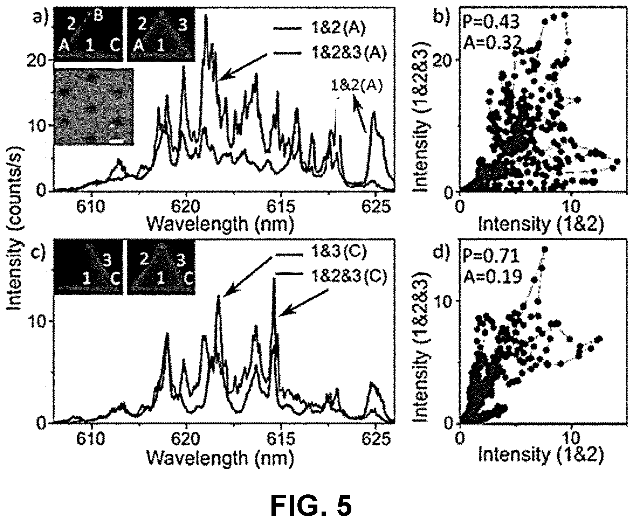

Figure 5 represents the simplest ring RL network with scattering centres made of holes (diameter size of 30 $\mu$m) arranged in hexagonal pattern, a) Spectrum acquired in position A by pumping lines 1 and 2 simultaneously (1&2), and by pumping all the lines at the same time (1&2&3). In the insets the corresponding out-of-plane emissions are reported, along with the SEM image of one scattering centre (scale bar 30 $\mu$m). b) Parametric plot of the intensity of the spectra reported in a). c) Spectra acquired in position C by pumping lines 1 and 3 (1&3), and by pumping all the lines (1&2&3). d) Parametric plot of the intensity of the spectra reported in c). The values of Pearson correlation (P) and of the area of the parametric plot (A) are reported for each case.

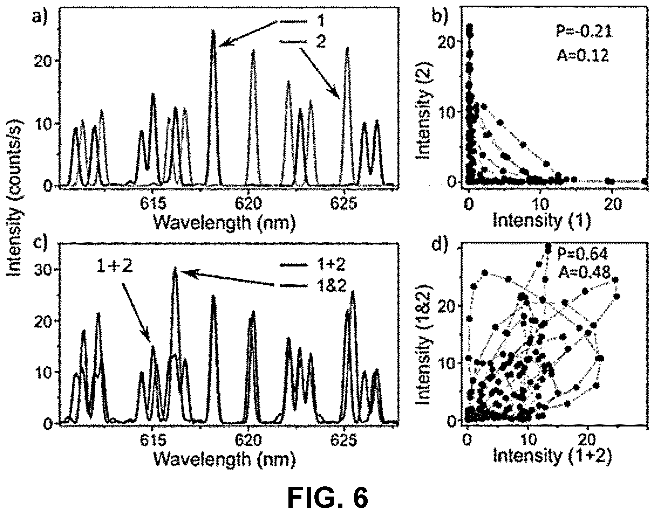

Figure 6 corresponds to a numerical simulation employing coupled mode theory. a) Spectra corresponding to two independent RLs, black and grey curves resulting when separate 10-sets of modes chosen from a common large pool are used for laser 1 and laser 2. b) Parametric plot of the grey/black spectra in a). c) Sum spectrum (1+2 line) and the compound spectrum (1&2 line) obtained by considering all the modes involved in laser 1 and laser 2 sets of modes in the coupled mode theory. d) The parametric plot of the spectra in c) shows an intermediate value of P and a high area parameter, evidence of a RL modes interaction.

## DETAILED DESCRIPTION OF THE INVENTION

A basic building block of an RL network according to the invention is shown in Figure 1. The network consists of two RLs (RL1, RL2) connected through a node, wherein said node comprises a scattering centre that furnishes feedback sufficient for both random resonators to lase. In this configuration, a first RL emission (RL1) can be affected by the action of the second RL emission (RL2) with which it has a scattering centre in common. In this network, the way the amplified modes of a single RL are modified strongly resembles the mode interaction in a standard laser cavity with an external feedback. This approach can be extended to different network archetypes of several RLs consisting of scattering centres with increasing complexity, sustaining effectively coupled RL interactions.

In a preferred embodiment of the invention (Figure 1a), each RL in the network comprises at least two spaced (typically with separation between 1-3 mm) scattering centres, connected by a laser-pumped stripe. When optical gain overcomes losses, stimulated emission, which is spectrally coupled with modes of the unconventional cavity, generates a RL.

The active medium in which the random lasing occurs comprises typically a solid, dye-doped polymer thin film (typically with thickness between 10-50 $\mu$m) in which the polymer matrix is chosen for its ability to prevent dye quenching. As a non-limiting example, the dye-doped biopolymer film can be produced by introducing 4-(dicyanomethylene)-2-methyl-6-(4-dimethylaminostyryl)-4H-pyran (DCM) molecules, with a 0.35% mass concentration in a deoxyribonucleic acid (DNA)-cetyltrimethyl ammonium (CTMA) polymer matrix. A cationic surfactant CTMA (Sigma-Aldrich 292737) can be used to make the DNA (Sigma-Aldrich D1626) soluble in organic solvents and then easily mixable with the DCM dye-molecules solution. The DNA-CTMA complex is then dissolved (4 vol.%) in ethanol and mixed with the DCM solution (0.5 vol.% in equal parts of ethanol and chloroform). The resulting blend is magnetically stirred for 5 hours. Then it is spread by dropcasting onto a glass substrate, and solid films with a thickness of about 20 $\mu$m are obtained after drying the sample at room temperature and pressure. Alterations of compositions, concentrations, times, temperatures and pressure ranges applied to this example, as well as any other polymer film suitable for its use in single RL setups are understood also as comprised within the scope of the invention for the configuration of coupled RL networks. Materials not belonging to this description but that furnish optical gain and are amenable to fabrication into said morphology are also comprised within the scope of this invention.

The networks of RLs are realised by inscribing scattering centres, for example by means of a direct laser-writing technique into the polymer film and by optically pumping the dye-polymer region through an ensemble of stripes projected on the sample surface (see the schematics of Figure 1a and the out-of-plane emission shown in Figure 1b). Production of arrangements of scattering centres by other means (such as lithographic techniques) and others (such as additive manufacturing) are comprised in further preferred embodiments of the invention.

Scattering centres need not be holes in the laser material thus including dielectric or metallic obstacles embedded in the active material is also covered within the invention's scope.

Each scattering centre comprises a single (Figures 1d-e) or a series of holes (typically with diameter size about tens of μm), arranged in a pattern as, for instance, in a hexagonal configuration as shown in Figures 1b-c. The rough internal surfaces of the drilled holes form a disordered air/polymer interface able to strongly scatter light coming from the pumped volume (see Figure 1b), thus providing the feedback for lasing action. The number of laser modes sustained by a RL with spatially localised feedback, as well as their threshold and angular distribution, has been proven to depend on the roughness and porosity of the scattering surfaces.

In a preferred embodiment of the invention, the scattering centres that serve as disordered mirrors and provide localised feedback for RL can be fabricated by using a direct laser-writing technique over the polymer thin film. For example, the polymer can be locally ablated by means of a short-pulsed (100 fs), high-energy (-250 μJ/pulse) Ti: Sapphire laser, emitting at 800 nm peak wavelength. The laser power, the number of shots delivered and the focusing position can be controlled by using a half-wave plate retarder in conjunction with a linear polariser, a software controlling the laser output and motorised translational stages, respectively. With this setup, a single laser shot focused by a lens of 5 cm focal length can drill a hole in the polymer matrix. In order to create a reproducible hole size, shot-to-shot laser power fluctuations can be overcome by lowering power and increasing the number of pulses (50 single shots) delivered to obtain each hole. This assures that, in the energy range between 200-300 μJ/pulse, the local ablation removes completely the polymer and reaches the underlying glass substrate, thus leaving a cylindrical-like air-defect in the polymer matrix. By varying the laser fluence, reproducible holes with diameter size in the range 30-150 μm can be achieved.

The scattering centres act as disordered mirrors and, at the same time, as out-of-plane couplers, which allow to probe the lasing modes by recording the scattered emission orthogonally to the sample surface. It is worth noting that random modes in this kind of RL with localised feedback emerge as stable sharp random spectral peaks and the same resonances are recorded in both scattering centres belonging to a resonator. This indicates that the device is acting as a single oscillator, supporting modes some of which enjoy sufficient gain to be amplified in the roundtrip between the two scattering regions.

In order to discuss how to measure the coupling between RL networks, a protocol to determine the existence of coupling on the basis of the spectra acquired from each or the combined resonator must be established. For instance, two different resonators measured independently provide spectra that can be taken as standard for independence (fully uncorrelated), whereas two spectra taken successively from a single resonator (only subject to stochastic fluctuations) can be used as standard for strong dependence and similarity, since high correlation is assured.

The simplest case consisting of two RLs having one scattering node in common is firstly considered. Under this configuration, two resonators activated one at a time show distinct, uncorrelated spectra that are taken as benchmark of spectral independence. When both RLs are pumped simultaneously, if they do interact (coupling through the common disordered mirror) the emerging spectral features must depend on the lasing state of both resonators. Several circumstances can be expected to occur such as frequencies common to both uncoupled resonators not belonging to the compound one, modes from some resonator becoming available to the compound one, modes not lasing in any resonator showing as a consequence of the coupling and, generally, changes in mode gain. This provides an alternative method to detect coupling between resonators: searching for dissimilarity between the spectrum of one when pumped alone and when in conjunction with the other. The fingerprint of an effective interaction would thus be a spectral modification, i.e. peak wavelength-shifts and/or an intensity redistribution that may be detected at every network node. Therefore, the modus operandi followed to test mode coupling occurrence comprises preferably acquiring spectra of each single RL (at the same sets of wavelengths) and compare them to the spectrum emerging from the simultaneous activation of both RLs in the network.

A setup device example to set a standard for uncoupled cavity lasers is shown in Figure 2a, where two RLs (labelled 1 and 2) share a scattering centre A. The device is composed by three scattering nodes made of single holes connected by two pumping lines passing through A. The two RL emissions (spectra 1 and 2) are expected to be independent, as they originate from two different cavities non-simultaneously activated and, as shown in Figure 2a, they show two uncorrelated sets of peaks when acquired in the same position (A).

In order to visually highlight the low correlation and spectral difference between the two RLs, the intensity of the first spectrum as a function of the intensity of the second spectrum is reported in Figure 2b for every acquired wavelength, where each data point has coordinates $[I_1(\lambda_i), I_2(\lambda_i)]$ for $i = 1 ... n$, with n corresponding to the number of wavelength data. This representation is referred to as parametric plot. Since in this picture the vast majority of data lay outside the diagonal line, a low linear correlation is evidenced, as quantified by the small value of the Pearson coefficient between the sets of intensities being $P = 0.14$. The high intensity peaks of one RL lying on background intensity regions in the other RL, appear as vertical and horizontal streaks, while data in fluorescence background regions of both resonators appear as a cloud at lower intensities. Contrary to this result, two proportional spectra would give a straight line in this kind of representation, with the Pearson correlation being directly proportional to the regression coefficient.

An additional measure to assess the degree of similarity between spectra can be provided by the area (A) enclosed by the lines that connect the parametric plot data. The area measure increases with shifted, overlapping peaks but, at variance with Pearson's correlation it attains very small values both for high correlation (e.g. between nearly proportional spectra) and very low correlation (vertical and horizontal streaks in Figure 2b). Therefore, a high A value implies that the overlap is not complete, but that the spectra exhibit small variations in the peak positions and/or amplitudes, as occurs if an effective weak interaction was in place. In the example analysis of Figure 2, it is the conjunction of the parameters P and A that allows to estimate the coupling between single RLs in the network. For instance, for the two independent RLs shown in Figure 2a, the low value of both parameters (P = 0.14 and A = 0.06) proves the negligible correlation between them.

When two resonators do couple, this interaction must appear as a difference between the sum of their independent spectra and the compound spectrum obtained with simultaneous pumping. In this context, the dissimilarity between added spectra from the involved resonators and the spectrum from the compound resonator can be used as proof of coupling. When both RLs are simultaneously active, the compound spectrum "1&2" shown in Figure 3a is acquired at the common scattering node, in order to overcome fluctuations in the out-of-plane emission between different nodes. This emission has to be compared to the sum of the separate spectra taken successively at the same node ("1+2" data shown in Figure 3a). If no interaction were taking place, each RL would independently scatter their emission out of the network and the compound emission would be the sum of the two single RL spectra, resulting in strong overlap and high correlation (P ≈ 1; A ≈ 0). The extreme opposite would lead to compound spectrum retaining no features from either resonator, thus bearing no re-semblance with their sum, in which case a streaked para-metric plot would result (P ≈ 0 ≈ A). A case where P ≈ 0; A ≈ 1 cannot occur for spiked spectra (or even background fluorescence) as it is a signature of fully random noise signal.

In Figures 3a-b the sum spectrum "1+2" shows a clear difference with the emission detected from the compound resonator "1&2", exhibiting lessened correlation, P ≈ 0.87, and a moderate area A ≈ 0.23. Typical values for correlation in successive acquisitions of one resonator emission provide a benchmark for highly correlated spectra as high as P≈ 0.98. A redistribution of the spectral density with suppression and/or enhancement of existing modes, up to the occurrence of new ones, is observed. It is remarkable how the compound emission is dominated by two strongly enhanced peaks at 615.6 nm (giving rise to the large loop in the parametric plot, responsible for most of the value of A) and 619.7 nm (originating one large vertical streak), while the majority of the emission is inhibited with respect to the sum spectrum. The emission stability of the RLs is checked in every spectral acquisition and the differences observed between the sum and the compound spectra cannot be ascribed to variations in the exciting conditions, polymer degradation or detection instabilities.

Apart from investigating the sum vs. compound spectral similarity at the common node, another experimental approach to prove mode coupling is evaluating how one RL emission from nodes that are not shared is influenced by the network interaction. Moreover, to prove the universality of the coupling occurrence, the geometry of the scattering centres can be varied by fabricating networks with three nodes, positioned at the corners of an equilateral triangle, each consisting of four holes arranged in a square pattern, as reported in the inset of Figure 4. Two single RLs (RL1, RL2) are induced by pumping the lines that connect corners A-B (line 1) and B-C (line 2), respectively, as shown in Figure 4a. The corresponding parametric plot demonstrates the low correlation between spectra from two independent single resonators excited successively (P = 0.05; A = 0.12, Figure 4b). In order to test the influence of RL2 on the emission of RL1, spectra can be collected from position A when RL2 is (line 1&2(A)) (Figure 4c) or is not pumped (line 1(A)). In this position, the emission of RL2 alone is null in the absence of RL1 action so that, trivially, the sum 1+2 equals the emission of RL1. When RL2 is turned on, new modes get amplified through line 1 and are observed in node A, for instance those at 608 nm and 623 nm, which belong to the emission of RL2. At the same time, some modes experienced a suppression, like those at 614 nm and 616 nm. The parametric plot, reported in Fig. 4d, furnishes a heavily reduced Pearson's correlation, P = 0.45, and a high area value, A = 0.44, thus bearing evidence of a strong inter-action between the two RLs.

To check the reliability of the method in addressing the RLs coupling, the modification induced on the emission of RL1 by the presence of a pumping line that does not constitute a RL (line 3 in Figure 4e does not end in a second backscattering centre) or that does not even share any scattering centre with RL1 (line 4 in Figure 4g) can be studied. These cases are reported in Figures 4e-h and constitute examples of high correlation (P ≈ 0.97) and low area parameter (A ≈ 0.1), proving how a pumping line not belonging to the network does not affect the emission of the RL considered.

A further example of coupled RL networks relates to ring networks. As example thereof, a RL network comprising three scattering centres made of seven holes arranged in hexagonal pattern (see Figures 1b-e) is presented, where all three single RLs emerging are exploited by pumping the device with lines connecting the scattering centres. When all single RLs are pumped, the spectra collected at each node position show high correlation, proving that the system can be considered a unique, compound resonator with delocalised modes (not associated to a particular resonator). Focusing on the effect induced by switching on/off a single RL of the network (Figure 5), the network emission variation induced by turning on the pumping line B-C (RL3) is reported in Figures 5a-b. The emission extracted from A (that does not belong to RL3), is strongly modified by the action of the random modes of RL3. The analysis of the parametric plot of the spectra collected when i) only lines 1 and 2 are pumped and ii) the three lines are pumped at the same time, gives P = 0.43 and A = 0.32, indicating a strong spectral modification that, again, produces a reduced correlation and a high enclosing area. In this case the coupling fingerprints are due to the spikiness of the spectra causing small wavelength shifts and large intensity variations, which contribute to the formation of many loops in the parametric plot. A similar behaviour, although resulting in a weaker interaction (P = 0.71 and A = 0.19), is found by measuring in C the effect of switching RL 2, reported in Figures 5c-d. Comparison between the three scattering centre morphologies presented in this document shows that larger hole number, i.e. increased disorder surfaces, boost the chances to establish coupling.

In order to further substantiate the experimental results discussed in the preceding examples, the RL networks can also be simulated numerically, for example in the framework of coupled mode theory. In order to do that, a large pool of modes (typically of about 40) can be created, from which each RL is assigned 10 modes ($j,k$ = 1... 10, randomly chosen among the globally defined), which satisfy a time dependent set of differential equations:

$$\acute{a}_k = i\omega_k a_k - \alpha_k a_k + \sum_{j\neq k} c_{j,k} a_j + g(t, \omega_k)\frac{a_k}{1+\gamma_k|a_k|^2}, \qquad (1)$$

where $a_k(t)$ is the complex amplitude of the k-th mode as a function of time, $\omega_k$ the frequency, $\alpha_k$ the losses, $c_{j,k} \propto |\omega_k - \omega_j|$ the coupling coefficient with all other $j$-th modes that fade with detuning, $g(t, \omega_k)$ the time dependent mode gain (pump pulse) and $\gamma_k$ the gain saturation coefficient. Eq. (1) describes how the k-th mode evolves in time. By Fourier transforming the solution, the spectral profile in amplitude and phase of each mode can be obtained, so that the full spectrum can be retrieved by summing the intensity of all modes. In this way, two independent RLs are represented by two sets of 10 modes randomly chosen from the pool, for which Eq. (1) is solved separately, that is, couplings are only considered within the 10-sets giving rise to the black ("1") and grey ("2") spectra reported in Figure 6a, respectively. Notice that, due to the coupling, not all modes necessarily show in the spectrum, having merged with neighbouring ones. The parametric plot of Figure 6b, heavily dominated by vertical and horizontal streaks, highlights the very low correlation between them, exhibiting P = -0.21 and A = 0.12.

In modelling the case of two coupled RLs, Eq. (1) can be solved considering that the two 10-sets of modes owned by each resonator enter the equation, as they are pumped at the same time. In this case, modes belonging to different sets were randomly interleaved and subject to coupling. The resulting compound spectrum ("1&2" in Figure 6c) is compared to the sum of the single resonators, ("1+2 in Figure 6c). The coupling gave rise to a sizable spectral redistribution with respect to the sum of the standalone emissions. In fact, the frequency and intensity of the peaks are slightly changed, with attraction/repulsion between adjacent modes and energy transfer due to the mode interaction. The corresponding parametric plot of Figure 6d shows a reduced value for the linear correlation (P = 0.64) along with a high area parameter (A = 0.48), closely resembling the experimental observations reported in Figure 3d, 4b and 5d. This demonstrates that, in the presence of an effective interaction, the spectra show a reduced linear correlation along with a high area value, as found experimentally.

To summarise, the present invention is defined in claims 1, 13 and 15 and results in a novel class of coupled RL networks featuring spatially localised feedback in a planar morphology by inscribing scattering centres in a film of gain material made of dye-doped biopolymer and spatially selective pumping the line joining them. By designing said networks such that the RL share scattering centres, it is possible to induce an effective coupling between them. Also, spatially resolved probing allows to spectrally detect their interaction. Moreover, by correlation analysis it is proved that RLs can interact as a synchronous ensemble and behave as coupled oscillators. The features and advantages claimed by the invention are supported by coupled mode theory calculations, which predict the observed spectral correlations.

The singularity of the elements comprised in the network enable independently pumping and probing each node, as well as characterising the emission from anywhere in the neural network.

The influence exerted by one resonator on those to which it is connected is highly non-linear, which enables the synaptic connection required in a neural network.

Given the possibility to excite analogically or digitally each pumping region and detect the emission from each node, the random neural network can be used as a basis for neural network computing, where inputs can be translated into pumping conditions and outputs extracted from nodes' emission. In this regard, training can be carried out by exploring pumping conditions leading to target spectra from output nodes. Alternatively, reservoir computing implementations can be created by fixing the pumping conditions and analysing the output from few selected nodes as a function of input fed to selected nodes.

A simple computing function can be achieved in what could be a spectrum synthesiser, consisting of a neural network which training makes capable to emit, from selected nodes, predesigned spectra with given characteristics in terms of spectral features (peaks, intensities, phases, etc) by training the pumping of the constituent RL resonators. Advantageously, the presented RL network technology and the specific embodiments described have a small footprint, low fabrication complexity and costs, making them good candidates to develop the field of RL nonlinear-interacting neural networks.

According to the results achieved by the invention, an ample potential for large connectivity and synaptic plasticity offered by this technology can trigger the design and deployment of more complex networks based on RL aiming to realise photonic neural network architectures and information systems. This possibility can be an initial step in developing statistical methods based on machine learning in order to address and evaluate the RL interaction even in a wide range of network geometries.

**Claims**

1. Random laser coupling system comprising at least three spatially distanced random-lasing light-scattering centres and at least two laser-pumping stripes, wherein each laser-pumping stripe connects two of said light-scattering centres thereby configuring at least two random laser resonators with spatially localised feedback,
and **characterised in that** one of the at least three light-scattering centres is connected to two of the laser-pumping stripes, so that the at least two random laser resonators share one of the light-scattering centres.

2. System according to the preceding claim, wherein the spatially distanced light-scattering centres and the laser-pumping stripes are inscribed in a polymer film.

3. System according to the preceding claim, further comprising a glass substrate wherein the polymer film is arranged.

4. System according to any of claims 2-3, wherein the polymer film comprises a thickness value between 10-50 $\mu$m.

5. System according to any of claims 2-4, wherein the random-lasing light-scattering centres comprise one or more holes inscribed on the polymer film, wherein the internal surface of the holes forms a light-scattering air/polymer interface.

6. System according to the preceding claim, wherein the holes comprise a diameter size value between 10-150 $\mu$m.

7. System according to any of claims 5-6, wherein the holes are arranged with a regular distribution or pattern on the polymer film.

8. System according to any of claims 5-7, wherein the number of holes in each light-scattering centre is between one and five, between six and ten, or above ten.

9. System according to any of the preceding claims, wherein the light-scattering centres and the laser-pumping stripes form a network topology, where every light-scattering centre is connected to at least one laser-pumping stripe and every pumping stripe share one scattering centre with another.

10. System according to any of claims 1-8, wherein the light-scattering centres and the laser-pumping stripes form an open topology, where one or more of the light-scattering centres are connected to only one laser-pumping stripe.

11. System according to any of the preceding claims, further comprising a pumping laser or a pumping light source adapted for pumping the random laser resonators.

12. System according to the preceding claim, wherein the at least three spatially distanced random-lasing light-scattering centres and the at least two laser-pumping stripes are arranged defining a plane, and wherein the pumping laser is oriented substantially orthogonal to said plane.

13. Method for coupling a plurality of random laser resonators comprising the use of a system according to any of the preceding claims and further comprising pumping the laser resonators on said system such that at least two random laser resonators that share one of the light-scattering centres are excited at the same time.

14. Method according to the preceding claim, comprising a time-programmed sequence of pumping laser pulse excitations over different selected random laser resonators of the system.

15. Use of a system according to any of claims 1-12 or a method according to any of claims 13-14 in information processing, wherein:

   - an information input is provided as a set of pumping conditions and an information output is extracted from the shared light-scattering centres' emission;

- reservoir computing implementations are created by fixing a set of pumping conditions and analysing an information output from a plurality of selected shared light-scattering centres' emission as a function of input fed to the selected shared scattering centres; and/or

- computing functions are achieved in a spectrum synthesiser, comprising a neural network of coupled random laser coupling systems adapted to emit, from selected shared scattering centres, predesigned spectra with given characteristics in terms of spectral features, by training the pumping of the constituent random laser resonators.

**Patentansprüche**

1. Kopplungssystem von Random-Lasern, welches mindestens drei räumlich beabstandete Random-Lasern-Lichtstreuzentren und mindestens zwei Laserpumpstreifen umfasst, wobei jeder Laserpumpstreifen zwei der genannten Lichtstreuzentren verbindet, wodurch mindestens zwei Random-Laserresonatoren mit räumlich lokalisierter Rückkopplung ausgebildet werden,
und **dadurch gekennzeichnet, dass** eines der mindestens drei Lichtstreuzentren mit zwei der Laserpumpstreifen verbunden ist, sodass die mindestens zwei Random-Laserresonatoren eines der Lichtstreuzentren teilen.

2. System nach dem vorhergehenden Anspruch, wobei die räumlich beabstandeten Lichtstreuzentren und die Laserpumpstreifen in einem Polymerfilm eingeschlossen sind.

3. System nach dem vorhergehenden Anspruch, welches zusätzlich ein Glassubstrat umfasst, in welchem der Polymerfilm angeordnet ist.

4. System nach einem der Ansprüche 2-3, wobei der Polymerfilm einen Dickenwert zwischen 10-50 $\mu$m umfasst.

5. System nach einem der Ansprüche 2-4, wobei die Random-Lasern-Lichtstreuzentren ein oder mehrere im Polymerfilm eingeschlossene Löcher umfassen, wobei die Innenfläche der Löcher eine Luft/Polymer-Lichtstreugrenzfläche bildet.

6. System nach dem vorhergehenden Anspruch, wobei die Löcher einen Durchmessergrößenwert zwischen 10-150 $\mu$m umfassen.

7. System nach einem der Ansprüche 5-6, wobei die Löcher mit einer regelmäßigen Verteilung oder einem regelmäßigen Muster auf dem Polymerfilm angeordnet sind.

8. System nach einem der Ansprüche 5-7, wobei die Anzahl von Löchern in jedem Lichtstreuzentrum zwischen eins und fünf, zwischen sechs und zehn, oder über zehn liegt.

9. System nach einem der vorhergehenden Ansprüche, wobei die Lichtstreuzentren und die Laserpumpstreifen eine Netzwerktopologie bilden, in welcher jedes Lichtstreuzentrum mit mindestens einem Laserpumpstreifen verbunden ist und jeder Pumpstreifen einem Streuzentrum miteinander teilen.

10. System nach einem der Ansprüche 1-8, wobei die Lichtstreuzentren und die Laserpumpstreifen eine offene Topologie bilden, in welcher eines oder mehrere der Lichtstreuzentren mit nur einem Laserpumpstreifen verbunden sind.

11. System nach einem der vorhergehenden Ansprüche, welches zusätzlich einen Pumplaser oder eine Pumplichtquelle umfasst, welcher/welche dazu angepasst ist, die Random-Laserresonatoren zu pumpen.

12. System nach dem vorhergehenden Anspruch, wobei die mindestens drei räumlich beabstandeten Random-Lasern-Lichtstreuzentren und die mindestens zwei Laserpumpstreifen unter Definierung einer Ebene angeordnet sind, und wobei der Pumplaser im Wesentlichen orthogonal zur genannten Ebene orientiert ist.

13. Verfahren zur Kopplung einer Vielzahl von Random-Laserresonatoren, welches die Verwendung eines Systems nach einem der vorhergehenden Ansprüche umfasst und welches zusätzlich das Pumpen der Laserresonatoren im genannten System umfasst, sodass mindestens zwei Random-Laserresonatoren, welche eines der Lichtstreuzentren teilen, gleichzeitig erregt werden.

**14.** Verfahren nach dem vorhergehenden Anspruch, welches eine zeitprogrammierte Sequenz von Pumplaser-Impulserregungen über unterschiedliche ausgewählte Random-Laserresonatoren des Systems umfasst.

**15.** Verwendung eines Systems nach einem der Ansprüche 1-12 oder eines Verfahrens nach einem der Ansprüche 13-14 bei der Informationsverarbeitung, wobei:

- eine Informationseingabe als Satz von Pumpbedingungen bereitgestellt wird und eine Informationsausgabe aus der Ausstrahlung der geteilten Lichtstreuzentren entnommen wird;
- Reservoir-Computing-Ausführungen geschafft werden, indem ein Satz von Pumpbedingungen fixiert wird und eine Informationsausgabe aus der Ausstrahlung einer Vielzahl von ausgewählten geteilten Lichtstreuzentren als Funktion einer Eingabe, welche in die ausgewählten geteilten Streuzentren eingespeist werden, analysiert wird; und/oder
- Rechenfunktionen in einem Spektrengenerator erzielt werden, welcher ein neuronales Netzwerk von Kopplungssystemen von gekoppelten Random-Lasern umfasst, welche dazu angepasst sind, aus ausgewählten geteilten Streuzentren, vorgestaltete Spektren mit gegebenen Charakteristiken im Sinne von spektralen Merkmalen auszustrahlen, indem das Pumpen der einzelnen Random-Laserresonatoren trainiert wird.

## Revendications

**1.** Système de lasers aléatoires couplés comprenant au moins trois centres de diffusion de lumière à effet laser aléatoire spatialement distants et au moins deux bandes de pompage laser, dans lequel chaque bande de pompage laser connecte deux desdits centres de diffusion de lumière, configurant ainsi au moins deux résonateurs laser aléatoires avec une rétroaction spatialement localisée, et **caractérisé en ce que** l'un des au moins trois centres de diffusion de la lumière est connecté à deux des bandes de pompage laser, de sorte qu'au moins deux résonateurs laser aléatoires partagent l'un des centres de diffusion de la lumière.

**2.** Système selon la revendication précédente, dans lequel les centres de diffusion de la lumière spatialement distants et les bandes de pompage laser sont inscrits dans un film polymère.

**3.** Système selon la revendication précédente, comprenant en outre un substrat en verre dans lequel est disposé le film polymère.

**4.** Système selon l'une quelconque des revendications 2-3, dans lequel le film polymère comprend une valeur d'épaisseur comprise entre 10 et 50 $\mu$m.

**5.** Système selon l'une quelconque des revendications 2 à 4, dans lequel les centres de diffusion de lumière à effet laser aléatoire comprennent un ou plusieurs trous inscrits sur le film polymère, la surface interne des trous formant une interface air/polymère de diffusion de la lumière.

**6.** Système selon la revendication précédente, dans lequel les trous comprennent une valeur de taille de diamètre comprise entre 10 et 150 $\mu$m.

**7.** Système selon l'une quelconque des revendications 5 à 6, dans lequel les trous sont disposés selon une distribution ou un motif régulier sur le film polymère.

**8.** Système selon l'une quelconque des revendications 5-7, dans lequel le nombre de trous dans chaque centre de diffusion de la lumière est compris entre un et cinq, entre six et dix, ou supérieur à dix.

**9.** Système selon l'une quelconque des revendications précédentes, dans lequel les centres de diffusion de la lumière et les bandes de pompage laser forment une topologie de réseau, où chaque centre de diffusion de la lumière est connecté à au moins une bande de pompage laser et chaque bande de pompage partage un centre de diffusion avec un autre.

**10.** Système selon l'une quelconque des revendications 1 à 8, dans lequel les centres de diffusion de la lumière et les bandes de pompage laser forment une topologie ouverte, où un ou plusieurs des centres de diffusion de la lumière sont connectés à une seule bande de pompage laser.

**11.** Système selon l'une quelconque des revendications précédentes, comprenant en outre un laser de pompage ou une source de lumière de pompage adaptée pour pomper les résonateurs laser aléatoires.

**12.** Système selon la revendication précédente, dans lequel au moins trois centres de diffusion de lumière laser aléatoire spatialement distants et au moins deux bandes de pompage laser sont disposés en définissant un plan, et dans lequel le laser de pompage est orienté sensiblement orthogonalement audit plan.

**13.** Procédé de couplage d'une pluralité de résonateurs laser aléatoires comprenant l'utilisation d'un système selon l'une quelconque des revendications précédentes et comprenant en outre le pompage des résonateurs laser sur ledit système de sorte qu'au moins deux résonateurs laser aléatoires qui partagent l'un des centres de diffusion de lumière soient excités en même temps.

**14.** Procédé selon la revendication précédente, comprenant une séquence programmée dans le temps d'excitations d'impulsions laser de pompage sur différents résonateurs laser aléatoires sélectionnés du système.

**15.** Utilisation d'un système selon l'une quelconque des revendications 1 à 12 ou d'un procédé selon l'une quelconque des revendications 13 à 14 dans le traitement d'informations, dans laquelle :

- une entrée d'informations est fournie sous la forme d'un ensemble de conditions de pompage et une sortie d'informations est extraite de l'émission des centres de diffusion de la lumière partagés ;
- des mises en oeuvre de calcul de réservoir sont créées en fixant un ensemble de conditions de pompage et en analysant une sortie d'informations provenant d'une pluralité d'émissions de centres de diffusion de la lumière partagés sélectionnés en fonction de l'entrée fournie aux centres de diffusion partagés sélectionnés ; et/ou
- des fonctions de calcul sont réalisées dans un synthétiseur de spectre, comprenant un réseau neuronal de systèmes de couplage laser aléatoires couplés adaptés pour émettre, à partir de centres de diffusion partagés sélectionnés, des spectres prédéfinis avec des caractéristiques données en termes de traits spectraux, en entraînant le pompage des résonateurs laser aléatoires constitutifs.

**FIG. 1**

**FIG. 2**

FIG. 3

FIG. 4

13

FIG. 5

FIG. 6